# EUROPEAN PATENT SPECIFICATION

(11) **EP 1 963 033 B1**
(45) Date of publication and mention of the grant of the patent: **16.11.2016**
(21) Application number: 06839113.5
(22) Date of filing: 06.12.2006
(51) Int. Cl.: B08B 7/00, C09D 7/00, C09D 9/04

(54) **COMPOSITION FOR THINNING AND CLEANUP OF PAINT**
ZUSAMMENSETZUNG ZUR VERDÜNNUNG UND SÄUBERUNG VON ANSTRICHMITTEL
COMPOSITION POUR LA DILUTION ET LE NETTOYAGE D UNE PEINTURE

(30) Priority: 10.12.2005 US 299070
(43) Date of publication of application: 03.09.2008
(73) Proprietor: W.M. Barr & Company, Inc., Memphis, TN 38113 (US)
(72) Inventor: Hawes, Charles L., Cordova, TN 38016 (US); Shireman, Dennis E., Marion, AR 72364 (US)
(74) Representative: MacLachlan & Donaldson
(86) International application number: PCT/US2006/046596
(87) International publication number: WO 2007/067647

(56) References cited:
- WO-A2-2006/124445
- GB-A- 1 459 025
- US-A- 4 608 840
- US-A- 5 204 016
- US-A- 5 854 188
- US-A- 6 010 995
- US-B1- 6 462 011
- US-B1- 6 503 891
- US-B2- 6 936 579

## Description

### TECHNICAL FIELD

The present invention relates to a composition for thinning paint and for paint cleanup. In a more specific aspect, this invention relates to a paint thinning and cleanup composition which is in the form of an emulsion. This invention also relates to a process for thinning paint and for the cleanup of paint.

In this application, the term "paint" will be understood to refer to pigmented coatings such as epoxies, enamels, latexes, primers, basecoats, oil based paints, varnishes and polyurethane finishes which are used to protect and/or beautify substrates. As used in this application, the terms "paint thinning", "paint thinner" and similar terms refer to compositions which reduce the viscosity of paint. Also, as used in this application, the term "paint cleanup" and similar terms refer to the dissolving and dispersing of paint from a substrate.

In this application, the term "emulsion" will be understood to refer to a suspension of small globules or droplets of a liquid in a second liquid in which the globules are not soluble. The emulsion of this application is a macroemulsion and can be described as solvent external, in which the liquid globules (sometimes referred to as the internal phase) are suspended in a second or surrounding liquid (external phase).

### BACKGROUND OF THE INVENTION

Compositions for paint thinning and cleanup are well-known in the industry, and many types of compositions exist for these particular uses.

Mineral spirits, a hydrocarbon solvent derived from crude oil, is perhaps the most commonly used paint thinner, especially for oil-based paint. Mineral spirits is also commonly used in paint cleanup for the tools arid other surfaces used in painting with oil-based paint. Because of its direct relation to crude oil, mineral spirits is subject to fluctuations in the price of crude oil, such fluctuations often being upward.

Additionally, as local, state and federal governments require stricter controls on the amount of volatile organic compounds and combustible chemicals which can be used, the compositions used to thin and cleanup paint often must be changed to comply with those controls.

Another commonly used paint thinner is turpentine. However, in contrast to turpentine, mineral spirits leaves no gummy residue, does not tend to deteriorate with age and is generally cheaper.

However, paint thinner and cleanup compositions which are predominantly or entirely composed of mineral spirits or turpentine may create safety concerns, as these two materials are highly combustible.

Biodegradability may also be a concern for current paint thinner and cleanup compositions which are predominantly or entirely composed of mineral spirits or turpentine.

In addition, when working with paint thinner and cleanup compositions, the user must also be concerned about the disposal of hazardous substances and the use of non-renewable resources. These two concerns are becoming more important as environmental issues become more significant.

The prior art contains many disclosures of compositions and methods which can be used to reduce the viscosity of certain compositions. For example, Bostrom et al. U.S. Patent No. 6,150,445 discloses a composition and method for use in reducing the viscosity of an aqueous concentrate.

Sau U.S. Patent No. 6,900,255 discloses a composition and method for suppressing (i.e., reducing) the viscosity in film forming coatings, such as latex paints.

In addition to disclosures in regard to viscosity reduction, the prior art discloses the use of emulsions in various industries. For example, Mulqueen et al. U.S. Patent No. 6,074,986 discloses a composition and method for the preparation of emulsions in the cosmetic, pharmaceutical, food, photographic, paint and polymer industries.

Another disadvantage or undesirable result with prior art paint thinners is their tendency to adversely affect the color and/or gloss of the paint, which can be evident after the thinned paint is applied to a substrate.

US Patent Publication No. US 6 462 011 discloses a composition for and a method of using the composition to disperse hydrocarbon based components into a liquid carrier. The composition is comprised of a lower alkyl ester of a fixed oil, such as a modified vegetable oil, in combination with at least one other compound which enhances the ability of the ester to form an aqueous emulsion which can separate and which can alter the wetting character of the ester. The method comprises contacting a material comprised of hydrocarbon based components with an

effective amount of composition for a time and a temperature sufficient to disperse the material into a liquid carrier.

US Patent Publication No. US 6,010,995 discloses a low volatile organic component stable, aqueous cleaning/degreasing composition in the form of a macroemulsion which is formulated by combining (a) a nonionic surfactant having certain specified characteristics; (b) an oligomeric or mono/polyfunctional hydrophobe having certain specified characteristics; and (c) water, the nonionic surfactant and hydrophobe being present in a weight ratio of between approximately 10:1 and 1:3 and the composition having a minimum composite score of 60% removal in the soilant marking removal test.

International Patent Publication No. WO 2006/124445 discloses a solvent internal (oil-in-water) emulsion composition remover which comprises a solvent, water, a thickener, a base and a surfactant. The removers are used in removing non-aqueous and aqueous coatings, waxes, greases, and the like, from substrates to which the coatings, waxes, greases, and the like, have been applied.

UK Patent Publication No. 1 459 025 discloses a paint composition which comprises (a) a solution of a water-insoluble film-forming binder in a water-immiscible diluent, (b) an acidic pigment having a zero zeta potential at a pH of less than 3.5 as herein defined and (c) a type of surfactant which is capable of forming a stable emulsion of (a) in water.

Thus, for various reasons, the paint thinner and cleanup compositions of the prior art do not achieve the desired results in many situations.

Therefore, there is a need in the industry for a paint thinner and cleanup composition which eliminates or minimizes the disadvantages or problems encountered with the prior art compositions.

### SUMMARY OF THE INVENTION

The present invention provides an improved composition for thinning paint and for paint cleanup. As compared to the compositions of the prior art as described above, the composition of this invention is cost effective, contains less volatile organic compounds, does not adversely affect the color or gloss of the paint being thinned and reduces concerns in regard to safety, hazardous waste disposal and renewal of resources.

The present invention also provides a process for thinning and cleanup of paint..

Briefly described, the present invention provides a new and improved composition which is a solvent external emulsion and which contains a hydrocarbon solvent, a surfactant and water. Each component is used in a defined weight percent range, based on the total weight of the composition.

Accordingly, an object of this invention is to provide a composition for thinning paint and for cleanup of paint.

Another object of this invention is to provide a paint thinner and cleanup composition which contains a low amount of volatile organic compounds.

Another object of this invention is to provide a paint thinner and cleanup composition which provides less fuel to burn.

Another object of this invention is to provide a paint thinner and cleanup composition which provides less hazardous waste for disposal.

Another object of this invention is to provide a paint thinner composition which does not adversely affect the color or gloss of the paint.

Another object of this invention is to provide a paint thinner and cleanup composition which is a solvent external emulsion.

Still another object of this invention is to provide a process for thinning and cleanup of paint.

Still another object of this invention is to provide a process for thinning and cleanup of paint with a composition which is a solvent external emulsion.

These and other objects, features and advantages of the present invention will become apparent from the following description.

### DETAILED DESCRIPTION OF THE INVENTION

The present invention provides a composition, in the form of a solvent external emulsion, for thinning paint and for paint cleanup, wherein the composition comprises an organic solvent, a surfactant and water. The present invention also provides a process by which the above-defined emulsion can be effectively used to thin and cleanup paint.

As defined above, there are certain essential components in the composition of this invention. These components and their corresponding weight percent ranges are shown below, with the weight percents being based on the total weight of the composition.
- **Component**: **Weight Percent Range**
- Organic Solvent: 30.0 to 75.0
- Surfactant: 0.01 to 10.0 (preferably 0.05 to 5.0)
- Water: 20.0 to 75.0 (preferably 45.0 to 70.0)

If these components are used in amounts outside these ranges, the composition may provide results which do not meet the user's objectives for thinning and/or cleanup of paint.

Optional components may be added to the composition of this invention to achieve other objectives. Examples of these optional components are preservatives, colorants, evaporation retardants, humectants, anti-settling agents, pigments, bittering agents, pH adjusting agents, etc. These optional components can be used in the amounts necessary to achieve desired results.

In this invention, the organic solvent functions as the primary thinning component. Examples of suitable organic solvents are aliphatic, aromatic and terpene hydrocarbons; halogenated solvents; esters and di-ester solvents; and mixtures of such organic solvents. The preferred organic solvent is mineral spirits.

Examples of suitable aliphatic and aromatic hydrocarbon solvents include mineral spirits, kerosene, naptha, xylene and mineral seal oil. Examples of suitable terpene hydrocarbon solvents include d-limonene, dipentene and turpentine. Examples of suitable halogenated solvents include methylene chloride and 1-chloro-4-trifluoromethyl benzene. Examples of suitable esters and di-ester solvents include methyl oleate and dimethyl glutarate.

The surfactant functions as a stabilizer to produce the emulsion and then to prevent separation of the emulsion into various components. Examples of suitable surfactants are nonionic surfactants, anionic surfactants, cationic surfactants, amphoteric surfactants and mixtures of such surfactants. The surfactant or surfactant mixture should be mixable in the solvent or solvent mixture and have an average HLB less than 8 and preferably less than 5.

Examples of suitable nonionic surfactants are:
alkoxylated alkyl phenols;
alkoxylated alcohols;
amines;
amides;
alkoxylated amides;
alkoxylated amines;
alkoxylated fatty acids;
alkoxylated thioethers;
glycerol esters;
sorbitan and alkoxylated sorbitan esters;
polygluconates;
silicone surfactants;
polymeric nonionic surfactants; and
ethylene oxide/propylene oxide block copolymers.

Examples of suitable cationic surfactants are:
alky trimethylammonium chlorides and bromides having from 12 to 22 carbon atoms and alkoxylated derivatives thereof;
dialkyl dimethylammonium chlorides and bromides having from 12 to 22 carbon atoms and alkoxylated derivatives thereof;
alkyl amine hydrochlorides and hydrobromides;
sulfates and sulfonates having from 12 to 22 carbon atoms and alkoxylated derivates thereof.

Examples of suitable anionic surfactants are:
acids and salts of alkyl sulfates and alkyl ether sulfates having from 12 to 30 carbon atoms;
acids and salts of alkylbenzene sulfonates having from 12 to 30 carbon atoms;
acids and salts of alkyldiphenyl oxides, sulfonates and disulfonates having from 12 to 30 carbon atoms;
acids and salts of alkyl naphthalene sulfonates having from 12 to 30 carbon atoms;
acids and salts of alkane or olefin sulfonates having from 10 to 20 carbon atoms;
acids and salts of ester sulfonates having from 12 to 20 carbon atoms;
acids and salts or various half salts of alkyl sulfosuccinates;
acids and salts of sulfobetames;
acids and salts of phosphate esters;
acids and salts of saturated and unsaturated fatty acids having from 10 to 24 carbon atoms;
acids and salts of taurates and isothionates having from 12 to 24 carbon atoms.

Example of suitable amphoteric surfactarits are:
amine oxides and betaines having from 10 to 20 carbon atoms;
alkyl imidazolines and imidazoline derivatives having from 10 to 24 carbon atoms;
acids and salts of alkylpropionates having from 10 to 24 carbon atoms;
acids and salts of alpha and beta alkyl aminoacid derivatives having from 10 to 24 carbon atoms;
alkyl substituted nitrogen heterocyclics having from 10 to 24 carbon atoms.

The water used in the composition of this invention can be distilled, soft, hard, tap, potable and non-potable water. Mixtures of such waters can be used.

The present invention is further illustrated by the following examples which are designed to teach those of ordinary skill in the art how to practice this invention and to represent the best mode contemplated for carrying out this invention.

### Procedure

The following emulsions were prepared using techniques and process steps which are well known in the industry, such as low, medium and high shear dispersing or homogenization.

### Example 1

| **Component** | **Weight Percent** |
|---|---|
| Mineral Spirits | 35.0 |
| Propylene Glyrol | 1.0 |
| Tall Oil Fatty Acid | 0.375 |
| 5 Mole Ethoxylated Cocoamine | 0.5 |
| Water | 63.125 |
| | 100.00 |

### Example 2

| **Component** | **Weight Percent** |
|---|---|
| Mineral Spirits | 35.0 |
| Hypermer 2234 (a polymeric emulsifier) | 1.0 |
| Water | 64.00 |
| | 100.00 |

### Example 3

| **Component** | **Weight Percent** |
|---|---|
| Mineral Spirits | 35.0 |
| Tall Oil Fatty Acid | 0.5 |
| 5 Mole Ethoxylated Cocoamine | 0.375 |
| Propylene Glycol | 1.0 |
| Sodium Chloride | 0.25 |
| Water | 62.875 |
| | 100.00 |

### Example 4

| **Component** | **Weight Percent** |
|---|---|
| Aromatic 150 Solvent | 35.0 |
| Tall Oil Fatty Acid | 0.375 |
| 5 Mole Ethoxylated Cocoamine | 0.5 |
| Propylene Glycol | 1.0 |
| Sodium Chloride | 0.25 |
| Water | 62.875 |
| | 100.00 |

### Example 5

| **Component** | **Weight Percent** |
|---|---|
| d-Limonene | 35.0 |
| 5 Mole Ethoxylated Cocoamine | 0.46 |
| Tall Oil Fatty Acid | 0.375 |
| Water | 64.165 |
| | 100.00 |

### Example 6

| **Component** | **Weight Percent** |
|---|---|
| Mineral Spirits | 35.0 |
| Oleic Acid Amide | 0.75 |
| Water | 64.25 |
| | 100.00 |

### Example 7

| **Component** | **Weight Percent** |
|---|---|
| Mineral Spirits | 50.0 |
| Tall Oil Fatty Acid | 0.375 |
| 5 Mole Ethoxylated Cocoamine | 0.5 |
| Water | 49.125 |
| | 100.00 |

### Example 8

| **Component** | **Weight Percent** |
|---|---|
| Mineral Spirits | 35.0 |
| Dodecylbenzene Sulfonic Acid | 0.5 |
| Sodium Chloride | 0.25 |
| Dodecyldimethylamine | 0.375 |
| Water | 63.875 |
| | 100.00 |

### Example 9

| **Component** | **Weight Percent** |
|---|---|
| Mineral Spirits | 35.0 |
| Silsurf J208-812 (a silicone glycol copolymer) | 0.75 |
| Water | 64.25 |
| | 100.00 |

**Example 10**

| **Component** | **Weight Percent** |
|---|---|
| Mineral Spirits | 35.0 |
| Oleyl Hydroxyethylimidazoline | 0.75 |
| Water | 64.25 |
| | 100.00 |

### Example 11

| **Component** | **Weight Percent** |
|---|---|
| Mineral Spirits | 20.0 |
| Oleyl Hydroxyethylimidazoline | 0.75 |
| Water | 79.25 |
| | 100.00 |

These compositions were tested for their ability to thin paint. Each composition provided good results, as shown below.

Thinning tests were conducted on GLIDDEN Ultra Hide oil/alkyd/semi gloss interior/exterior paint using a Ford #4 Cup, and results were expressed in time in seconds to drain.
Paint Only = 446 seconds
Example 1 = 215 seconds
Example 2 = 188 seconds
Example 3 = 183 seconds
Example 4 = 148 seconds
Example 5 = 183 seconds
Example 6 = 193 seconds
Example 7 = 134 seconds
Example 8 = 185 seconds
Example 9 = 212 seconds
Example 10 = 227 seconds

The composition of Example 10 was used to thin the commercially available paints identified below, and the thinned paints were then tested for gloss retention. The results show that these thinned paints had a gloss retention which is improved or equivalent to the gloss retention when these same paints were thinned with the same amount of mineral spirits. The results show the GARDNER Micro Tri Gloss 60° readings after the thinned paints are allowed to dry.

| **Paint** | **10% Mineral Spirits** | **10% Example 10** |
|---|---|---|
| FARRELL Calhoun Ford blue | 89.77 | 88.56 |
| GLIDDEN Ultra Hide crimson red | 87.13 | 90.6 |
| GLIDDEN Ultra Hide green | 74.63 | 78.43 |
| SHERWIN WILLIAMS Enamel green | 73.23 | 78.23 |
| SHERWIN WILLIAMS Enamel safety red | 83.13 | 85.8 |

The solvent external emulsion compositions of this invention are highly effective in thinning oil based alkyd paints and in the cleanup of oil based alkyd and latex paints.

By using less solvent than conventional paint thinning and cleanup compositions, the solvent external compositions of this invention provide several advantages when compared to such conventional compositions:
In regard to safety --- furnishes less fuel to burn if a fire should occur; and
   * In regard to disposal --- provides less hazardous waste for disposal;

The present invention has been described in detail with particular reference to certain embodiments, but variations and modifications can be made without departing from the spirit and scope of the invention as defined in the following claims

## Claims

1. A solvent external emulsion composition for thinning and cleanup of paint, wherein the composition comprises:
A. from 30.0 to 75.0 percent by weight of an organic solvent;
B. from 0.01 to 10.0 percent by weight of a surfactant; and
C. from 20.0 to 75.0 percent by weight of water.

2. A composition as defined by Claim 1 wherein the organic solvent is an aliphatic hydrocarbon, aromatic hydrocarbon, terpene hydrocarbon or a mixture thereof;
optionally wherein the organic solvent is a halogenated solvent;
optionally wherein the organic solvent is an ester or di-ester solvent;
optionally wherein the organic solvent is mineral spirits, kerosene, naptha, xylene or mineral seal oil;
optionally wherein the organic solvent is d-limonene; and
optionally wherein the water is distilled water.

3. A composition as defined by Claim 1 wherein the organic solvent is mineral spirits.

4. A composition as defined by Claim 1 wherein the surfactant is a nonionic, anionic, cationic or amphoteric surfactant or a mixture thereof.

5. A composition as defined by Claim 1 wherein the surfactant is a mixture of tall oil fatty acid and 5 mole ethoxylated cocoamine.

6. A composition as defined by Claim 1 wherein the surfactant is 5 mole ethoxylated cocoamine.

7. A composition as defined by Claim 1 wherein the surfactant is oleic acid amide; optionally wherein the surfactant is oleyl hydroxyethylimidazoline.

8. A composition as defined by Claim 1 wherein the surfactant is a mixture of dodecydimethylamine and dodecylbenzene sulfonic acid.

9. A process for thinning of paint, wherein the process comprises mixing paint and a solvent external emulsion composition which comprises:
A. from 30.0 to 75.0 percent by weight of an organic solvent;
B. from 0.01 to 10.0 percent by weight of a surfactant; and
C. from 20.0 to 75.0 percent by weight of water.

10. A process as defined by Claim 9 wherein the organic solvent is mineral spirits; optionally wherein the organic solvent is d-limonene.

11. A process for cleanup of paint, wherein the process comprises dissolving and dispersing of paint with a solvent external emulsion composition which comprises:
A. from 30.0 to 75.0 percent by weight of an organic solvent;
B. from 0.01 to 10.0 percent by weight of a surfactant; and
C. from 20.0 to 75.0 percent by weight of water.

12. A process as defined by Claim 11 wherein the organic solvent is mineral spirits:
optionally wherein the organic solvent is d-limonene.

## Patentansprüche

1. Emulsionszusammensetzung mit Lösemittel als äußerer Phase zum Verdünnen und Entfernen von Lacken, wobei die Zusammensetzung Folgendes umfasst:
A. zu 30,0 bis 75,0 Gewichtsprozent ein organisches Lösemittel,
B. zu 0,01 bis 10,0 Gewichtsprozent ein Tensid und
C. zu 20,0 bis 75,0 Gewichtsprozent Wasser.

2. Zusammensetzung nach Anspruch 1, wobei das organische Lösemittel ein aliphatischer Kohlenwasserstoff, ein aromatischer Kohlenwasserstoff, ein Teipenkohlenwasserstoff oder eine Mischung daraus ist,
wobei optional das organische Lösemittel ein halogeniertes Lösemittel ist,
wobei optional das organische Lösemittel ein Ester- oder Diesterlösemittel ist,
wobei optional das organische Lösemittel Testbenzin, Kerosin, Naphtha, Xylen oder Leuchtöl ist,
wobei optional das organische Lösemittel d-Limonen ist und
wobei optional das Wasser destilliertes Wasser ist.

3. Zusammensetzung nach Anspruch 1, wobei das organische Lösemittel Testbenzin ist.

4. Zusammensetzung nach Anspruch 1, wobei das Tensid ein nicht-ionisches, anionisches, kationisches oder amphoteres Tensid oder eine Mischung daraus ist.

5. Zusammensetzung nach Anspruch 1, wobei das Tensid eine Mischung aus Tallölfettsäure und 5 Mol ethoxyliertem Kokosamin ist.

6. Zusammensetzung nach Anspruch 1, wobei das Tensid 5 Mol ethoxyliertes Kokosamin ist.

7. Zusammensetzung nach Anspruch 1, wobei das Tensid Ölsäureamid ist,
wobei optional das Tensid Oleylhydroxyethylimidazolin ist.

8. Zusammensetzung nach Anspruch 1, wobei das Tensid eine Mischung aus Dodecyldimethylamin und Dodecylbenzolsulfonsäure ist.

9. Verfahren zum Verdünnen von Lacken, wobei das Verfahren das Mischen von Lack und einer Emulsionszusammensetzung mit Lösemittel als äußerer Phase umfasst, die Folgendes umfasst:
A. zu 30,0 bis 75,0 Gewichtsprozent ein organisches Lösemittel,
B. zu 0,01 bis 10,0 Gewichtsprozent ein Tensid und
C. zu 20,0 bis 75,0 Gewichtsprozent Wasser.

10. Verfahren nach Anspruch 9, wobei das organische Lösemittel Testbenzin ist,
wobei optional das organische Lösemittel d-Limonen ist.

11. Verfahren zum Entfernen von Lacken, wobei das Verfahren das Lösen und Dispergieren von Lacken mit einer Emulsionszusammensetzung mit Lösemittel als äußerer Phase umfasst, die Folgendes umfasst:
A. zu 30,0 bis 75,0 Gewichtsprozent ein organisches Lösemittel,
B. zu 0,01 bis 10,0 Gewichtsprozent ein Tensid und
C. zu 20,0 bis 75,0 Gewichtsprozent Wasser.

12. Verfahren nach Anspruch 11, wobei das organische Lösemittel Testbenzin ist,
wobei optional das organische Lösemittel d-Limonen ist.

## Revendications

1. Composition d'émulsion externe de solvant pour dilution et purification de peinture, la composition comprenant :
A. de 30,0 à 75,0 pour cent en poids d'un solvant organique ;
B. de 0,01 à 10,0 pour cent en poids d'un tensioactif ; et
C. de 20,0 à 75,0 pour cent en poids d'eau.

2. Composition telle que définie par la revendication 1 dans laquelle le solvant organique est un hydrocarbure aliphatique, un hydrocarbure aromatique, un hydrocarbure terpénique ou un mélange de ceux-ci ;
facultativement dans laquelle le solvant organique est un solvant halogéné ;
facultativement dans laquelle le solvant organique est un solvant ester ou diester ; facultativement dans laquelle le solvant organique est une essence minérale, du kérosène, du naphte, du xylène ou une huile hydraulique minérale (mineral seal oil) ;
facultativement dans laquelle le solvant organique est le d-limonène ; et
facultativement dans laquelle l'eau est de l'eau distillée.

3. Composition telle que définie par la revendication 1 dans laquelle le solvant organique est une essence minérale.

4. Composition telle que définie par la revendication 1 dans laquelle le tensioactif est un tensioactif non ionique, anionique, cationique ou amphotère ou un mélange de ceux-ci.

5. Composition telle que définie par la revendication 1 dans laquelle le tensioactif est un mélange d'acide gras de tall-oil et de cocoamine éthoxylée 5 moles.

6. Composition telle que définie par la revendication 1 dans laquelle le tensioactif est la cocoamine éthoxylée 5 moles.

7. Composition telle que définie par la revendication 1 dans laquelle le tensioactif est l'amide d'acide oléique ;
facultativement dans laquelle le tensioactif est l'oléyl-hydroxyéthylimidazoline.

8. Composition telle que définie par la revendication 1 dans laquelle le tensioactif est un mélange de dodécydiméthylamine et d'acide dodécylbenzènesulfonique.

9. Procédé de dilution de peinture, le procédé comprenant le mélange de peinture et d'une composition d'émulsion externe de solvant qui comprend :
A. de 30,0 à 75,0 pour cent en poids d'un solvant organique ;
B. de 0,01 à 10,0 pour cent en poids d'un tensioactif ; et
C. de 20,0 à 75,0 pour cent en poids d'eau.

10. Procédé tel que défini par la revendication 9 dans lequel le solvant organique est une essence minérale ; facultativement dans lequel le solvant organique est le d-limonène.

11. Procédé de purification de peinture, le procédé comprenant la dissolution et la dispersion de peinture avec une composition d'émulsion de solvant externe qui comprend :
A. de 30,0 à 75,0 pour cent en poids d'un solvant organique ;
B. de 0,01 à 10,0 pour cent en poids d'un tensioactif ; et
C. de 20,0 à 75,0 pour cent en poids d'eau.

12. Procédé tel que défini par la revendication 11 dans lequel le solvant organique est une essence minérale ;
facultativement dans lequel le solvant organique est le d-limonène.
